# EUROPÄISCHE PATENTSCHRIFT

(11) **EP 1 989 495 B1**
(45) Veröffentlichungstag und Bekanntmachung des Hinweises auf die Patenterteilung: **08.07.2009**
(21) Anmeldenummer: 07724039.8
(22) Anmeldetag: 05.04.2007
(51) Int. Cl.: F24J 2/54

(54) **VORRICHTUNG ZUR NACHFÜHRUNG VON SOLARZELLEN**
DEVICE FOR GUIDING SOLAR CELLS
SYSTÈME D'ORIENTATION DE CELLULES SOLAIRES

(30) Priorität: 11.04.2006 DE 202006005881 U
(43) Veröffentlichungstag der Anmeldung: 12.11.2008
(73) Patentinhaber: Kitz, Hans Josef, 53844 Troisdorf (DE)
(72) Erfinder: Kitz, Hans Josef, 53844 Troisdorf (DE)
(74) Vertreter: Wagner, Matthias
(86) Internationale Anmeldenummer: PCT/EP2007/003098
(87) Internationale Veröffentlichungsnummer: WO 2007/118620

(56) Entgegenhaltungen:
- EP-A- 0 059 653
- AT-U1- 7 839
- DE-A1- 10 144 601
- DE-A1-4102004 014 85
- US-A- 2 913 583
- US-A- 3 988 166
- US-A- 4 205 661

## Beschreibung

Die Erfindung betrifft eine Vorrichtung zur Nachführung von Solarzellen, die in einem Tragrahmen angeordnet sind und mittels eines Nachführantriebes um mindestens eine Achse verschwenkbar sind.

Derartige Vorrichtungen zur Nachführung von Solarzellen sind bereits vielfältig bekannt und dienen dazu, die Solarzellen entlang mindestens einer Achse der Sonne nachzuführen, so dass ein möglichst optimaler Auftreffwinkel der Sonnenstrahlen auf die Oberflächen der Solarzellen zwecks maximaler Energieausbeute eingestellt wird. Beispielhaft sei hierzu auf die DE 202 04 679 U1, DE 100 22 236 A1, US-A-5 022 929 sowie JP 2001-077393 A verwiesen.

Derartige Vorrichtungen zur Nachführung von Solarzellen sollen besonders leichtgängig sein, um geringen Energiebedarf für die Nachführung aufzuweisen, einfach in der Herstellung sein und überdies über lange Zeiträume einen störungsfreien Betrieb sicherstellen.

Aus der US-A-2 913 583 ist eine gattungsgemäße Vorrichtung zur Nachführung von Solarzellen mit einer ringsegmentförmigen Führungsschiene bekannt, die am Tragrahmen befestigt ist und mittels eines über eine Verzahnung mit der Führungsschiene in Eingriff stehenden Antriebsmotors verschwenkt werden kann. Der Tragrahmen bedarf bei der bekannten Ausführungsform jedoch eines zusätzlichen Lagergestells, was sehr aufwendig ist und hohes Gewicht aufweist, was den Anwendungsbereich enorm einschränkt.

Die Erfindung hat sich die Aufgabe gestellt, eine besonders einfach aufgebaute und zuverlässig arbeitende Vorrichtung zur Nachführung von Solarzellen der eingangs genannten Art vorzuschlagen, die preiswert herstellbar ist und niedriges Eigengewicht aufweist, so dass sie gleichermaßen auf Dächern wie auch freistehend auf einem Tragmast eingesetzt werden kann.

Zur Lösung der gestellten Aufgabe wird erfindungsgemäß die Ausbildung einer Vorrichtung zur Nachführung von Solarzellen gemäß den Merkmalen des Patentanspruches 1 vorgeschlagen.

Vorteilhafte Ausgestaltungen und Weiterbildungen der Erfindung sind Gegenstand der Unteransprüche.

Der erfindungsgemäße Vorschlag beruht darauf, dass die am Tragrahmen befestigte ringsegmentförmige Führungsschiene des Nachführantriebes zwischen mindestens drei Lagerrädern in Umfangsrichtung der Führungsschiene verschieblich gelagert ist, wobei mindestens ein Lagerrad radial innerhalb der Führungsschiene und mindestens zwei Lagerräder radial außerhalb der Führungsschiene angeordnet sind und die Führungsschiene zwangsweise um die Schwenkachse führen. Die Kernidee der erfindungsgemäßen Vorrichtung ist daher, eine zwischen mindestens drei Lagerrädern zwangsgeführte Führungsschiene vorzusehen, die aufgrund ihrer ringsegmentförmigen Gestalt eine Verschwenkbarkeit des an der Führungsschiene gehalterten Tragrahmens um eine Schwenkachse ermöglicht. Je nach Ausrichtung der Führungsschiene kann es sich hierbei um eine Azimuthachse handeln, d.h. der Tragrahmen wird zwischen Ost- und Westrichtung verschwenkt, oder aber auch um eine Elevationsachse, d.h. der Tragrahmen mit den daran befestigten Sonnenzellen wird in seiner Neigung gegenüber der Horizontalen verstellt. Durch die zwischen mindestens drei Lagerrädern zwangsgeführte Führungsschiene mit zugeordnetem Antriebsmotor wird hierbei eine besonders kompakte Vorrichtung zur Nachführung von Solarzellen geschaffen, die einfach herstellbar und nahezu wartungsfrei betreibbar ist und geringes Eigengewicht aufweist.

Zur Ausbildung des Antriebsmotors der erfindungsgemäßen Vorrichtung stehen verschiedene Möglichkeiten offen.

Gemäß einem Vorschlag der Erfindung ist der Antrieb als Linearantrieb ausgebildet, beispielsweise elektrisch, hydraulisch oder pneumatisch betreibbar. Ein solcher Linearantrieb kann einerseits am Tragrahmen angreifen und sich andererseits an einem geeigneten Festlager abstützen, so dass eine Verstellung des Tragrahmens entlang der zwangsweise geführten Führungsschiene um die dadurch definierte Schwenkachse ermöglicht ist.

Gemäß einer alternativen Ausführungsform der Erfindung kann auch vorgesehen sein, dass der Antriebsmotor mit mindestens einem der Lagerräder zum Drehantrieb desselben verbunden ist, so dass mindestens ein Lagerrad angetrieben wird und unmittelbar auf die Führungsschiene dergestalt einwirkt, dass diese in Umfangsrichtung derselben verschoben wird und sich die gewünschte Schwenkbewegung einstellt.

Hierbei kann das mit dem Antriebsmotor verbundene mindestens eine Lagerrad mittels Reibschluss die Führungsschiene antreiben, wozu es zweckmäßigerweise mit einer reibungserhöhenden Auflage entlang des Umfanges versehen ist, beispielsweise in Form einer gummierten Lauffläche. Auch kann vorgesehen sein, die Führungsschiene auf ihrer dem angetriebenen Lagerrad zugewandten Seite mit einer Verzahnung zu versehen und das angetriebene Lagerrad mit einer entsprechenden Verzahnung für eine Eingriffsverbindung mit der Führungsschiene auszubilden, so dass ein formschlüssiger Antrieb der Führungsschiene bewirkbar ist. Die Verzahnung kann beispielsweise oberflächlich auf die Führungsschiene aufgebracht oder in diese eingearbeitet sein oder aber die Führungsschiene wird auf ihrer entsprechenden Oberfläche mit einem Zahnriemenabschnitt belegt, der sodann die gewünschte Verzahnung ausbildet, in die das gezahnte angetriebene Lagerrad eingreift.

Sofern mittels der erfindungsgemäßen Vorrichtung eine Verschwenkung der Solarzellen um die Azimuthachse, d.h. in Ost-West-Richtung erfolgen soll, ist bevorzugt der Tragrahmen mittels eines Schwenklagers schwenkbar um die Azimuthachse gelagert und in einem bestimmten Neigungswinkel angeordnet und wird mittels des Nachführantriebes um die Azimuthachse verschwenkt. Diese Ausgestaltung eignet sich insbesondere für die Montage der erfindungsgemäßen Vorrichtung auf einer Dachfläche.

Es kann auch vorgesehen sein, den Tragrahmen an einer Tragsäule zu haltern und mittels des Nachführantriebes um eine Elevationsachse zu verschwenken, was bei entsprechend beengten Platzverhältnissen oder aber sogenannten Insellösungen von Vorteil ist, da dann die Tragsäule als Montagebasis der erfindungsgemäßen Vorrichtung sowie der im Tragrahmen gehalterten Solarzellen dient und nur eine geringe Stellfläche benötigt.

Die Tragsäule kann ferner ein Drehlager umfassen, mittels dessen der Nachführantrieb und der Tragrahmen zusätzlich um eine Hochachse verschwenkbar ist, so dass eine mehrachsige Nachführung der Solarzellen ermöglicht wird.

Die erfindungsgemäß vorgeschlagene Führungsschiene ist vorzugsweise halbringförmig ausgebildet, d.h. sie überspannt einen Winkel von 180°.

Weitere Ausgestaltungen und Einzelheiten der Erfindung werden nachfolgend anhand von Ausführungsbeispielen in der Zeichnung näher erläutert. Es zeigen:
- Figur 1: eine erste Ausführungsform der erfindungsgemäßen Vorrichtung in einer Seitenansicht,
- Figur 2: die Ansicht gemäß Pfeil X auf die Vorrichtung gemäß Figur 1,
- Figur 3: eine zweite Ausführungsform der erfindungsgemäßen Vorrichtung in der Seitenansicht,
- Figur 4: die Ansicht auf die Vorrichtung gemäß Pfeil V in Figur 3,
- Figur 5: die Seitenansicht einer weiteren Ausführungsform der erfindungs- gemäßen Vorrichtung,
- Figur 6: die Ansicht auf die Vorrichtung gemäß Pfeil Y in Figur 5,
- Figur 7: in einer Seitenansicht eine weitere Ausführungsform der Erfin- dung,
- Figur 8: die Ansicht gemäß Pfeil Z in Figur 7 auf die Vorrichtung.

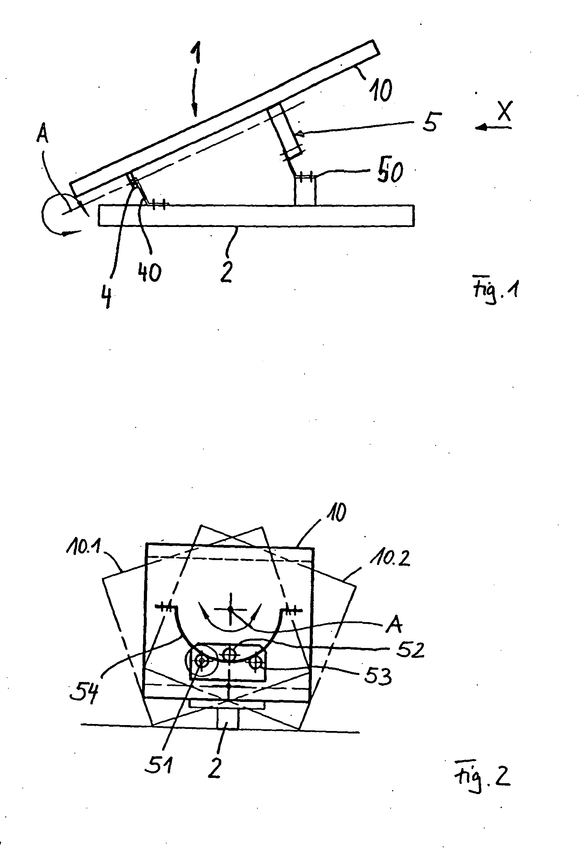

In den Figuren 1 und 2 ist eine Vorrichtung zur Nachführung von Solarzellen 1 dargestellt, wobei die Solarzellen 1 in an sich bekannter Weise innerhalb eines Tragrahmens 10 angeordnet sind. Die in diesen Figuren 1 und 2 dargestellte Vorrichtung eignet sich insbesondere für die Montage auf einer Dachfläche, sie verfügt zu diesem Zweck über einen Grundrahmen 2, der an geeigneter Stelle in die Dacheindeckung integriert oder auf diese aufgesetzt wird.

Oberhalb des Grundrahmens 2 ist eine Lagerkonsole 40 befestigt, die an ihrem freien Ende ein Schwenklager 4 trägt, welches mit dem Tragrahmen 10 verbunden ist.

Beabstandet hiervon ist eine weitere Konsole 50 vorgesehen, die der Befestigung eines nachfolgend noch näher erläuterten Nachführantriebes 5 für den Tragrahmen 10 dient, wobei aufgrund der größeren Höhe der Konsole 50 mitsamt Nachführantrieb 5 über dem Grundrahmen 2 im Vergleich zur Lagerkonsole 40 mit Schwenklager 4 eine geneigte Anordnung des Tragrahmens 10 gegenüber dem horizontal verlaufenden Grundrahmen 2 resultiert. Der Neigungswinkel kann je nach Bedarf und Einbausituation gewählt werden.

Das Schwenklager 4 definiert demgemäß eine unter einem bestimmten Winkel zur Horizontalen verlaufende Azimuthachse A, um die der Tragrahmen 10 zwecks Nachführung in Abhängigkeit vom Sonnenstand von Ost nach West und umgekehrt verschwenkt werden kann, was mittels des Nachführantriebes 5 bewirkt wird.

Der in näheren Einzelheiten aus der Figur 2 ersichtliche Nachführantrieb umfasst eine ringsegmentförmige, hier halbringförmige Führungsschiene 54, die mit ihren beiden Enden am Tragrahmen befestigt ist und zwischen drei in der Konsole 50 gelagerten Lagerrädern 51, 52, 53 gelagert und zwangsgeführt ist, indem das eine Lagerrad 52 radial innerhalb der Führungsschiene 54 angeordnet und die verbleibenden Lagerräder 51, 53 radial außerhalb der Führungsschiene angeordnet sind und allesamt auf der Oberfläche derselben abrollen. Auf diese Weise ist die Führungsschiene 54 zwischen den Lagerrädern 51, 52, 53 gelagert und in Umfangsrichtung der Führungsschiene verschieblich.

In nicht näher dargestellter Weise steht ein nicht dargestellter Antriebsmotor mit einem der Lagerräder, hier dem Lagerrad 51 in Wirkverbindung und kann dieses Lagerrad 51 im und gegen den Uhrzeigersinn drehend antreiben. Die Übertragung der Drehbewegung des angetriebenen Lagerrades 51 auf die äußere Umfangsfläche der Führungsschiene 54 kann hierbei wahlweise durch Reibschluss erfolgen, indem das Lagerrad 51 als Reibrad z.B. mit einer Gummierung versehen ist, oder aber die Führungsschiene 54 weist auf ihrer dem angetriebenen Lagerrad 51 zugewandten Außenseite eine Verzahnung auf, die beispielsweise eingeformt sein kann oder auch durch bereichsweises Aufbringen eines Abschnittes eines Zahnriemens einfach erzeugt werden kann. Sodann weist das angetriebene Lagerrad 51 eine entsprechende Außenverzahnung auf, die in Eingriff mit der Verzahnung der Führungsschiene 54 steht und von daher einen formschlüssigen Antrieb der Führungsschiene 54 entlang ihrer Umfangsrichtung zwischen den Lagerrädern 51, 52, 53 um die Azimuthachse A bewirkt.

Es ist von daher offensichtlich, dass eine solchermaßen ausgebildete Vorrichtung eine Verschwenkung der in einem Tragrahmen 10 gehalterten Solarzellen um die Azimuthachse A von einer ersten Endstellung 10.1 bis hin zu einer zweiten Endstellung 10.2 bewirken kann, wobei die Größe des Verstellwinkels durch entsprechende Dimensionierung der Führungsschiene 54 und des Nachführantriebes 5 den jeweiligen Erfordernissen angepasst werden kann.

Die Steuerung des Antriebes erfolgt in bekannter Weise durch hier nicht näher erläuterte Steuerungseinrichtungen.

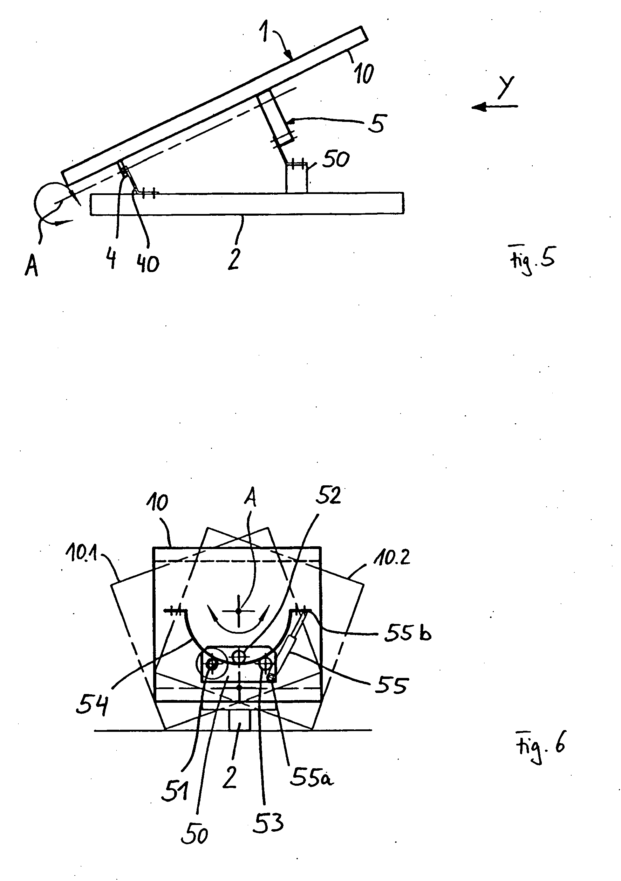

Alternativ zu diesen anhand der Figuren 1 und 2 dargestellten Ausführungsbeispielen zeigen die Figuren 5 und 6 prinzipiell die gleiche Anordnung, jedoch ist hierbei keines der Lagerräder 51, 52, 53 mit dem Antriebsmotor verbunden, sondern die Lagerräder übernehmen lediglich die Zwangsführung der Führungsschiene. Der eigentliche Antrieb der Führungsschiene und damit die Verschwenkung des Tragrahmens 10 um die Azimuthachse A wird in diesem Fall von einem Linearantrieb 55, z.B. einem Pneumatikzylinder bewirkt, der zwischen einem Festlager 55a an der Konsole 50 und einem Gelenk 55b am Ende der Führungsschiene 54 sich erstreckt und bei Ein- bzw. Ausfahren des Zylinders des Linearantriebes 55 eine entsprechende Verschwenkung des Tragrahmens 10 um die Azimuthachse A bewirkt.

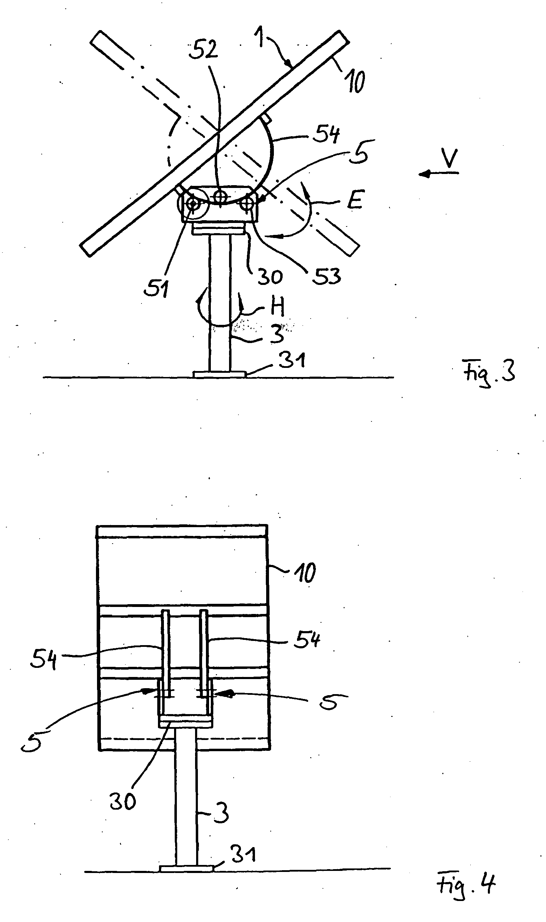

In den Figuren 3 und 4 ist eine weitere Ausführungsform einer Vorrichtung zur Nachführung von Solarzellen dargestellt, bei der gleiche Teile gleiche Bezugsziffern zu den vorangehend erläuterten Ausführungsformen aufweisen.

Hierbei ist der den Tragrahmen 10 mit den Solarzellen 1 über den die Führungsschiene 54 tragenden Nachführantrieb 5 am oberen Ende einer Tragsäule 3 befestigt, so dass auf einen Grundrahmen 2 verzichtet werden kann und für die Aufstellung einer derartigen Vorrichtung lediglich eine geeignete Montagefläche für den Montagesockel 31 der Tragsäule 3 benötigt wird. Eine solche Aufstellungsform eignet sich insbesondere als Insellösung, wenn nur wenig Stellfläche zur Verfügung steht.

Am oberen Ende der Tragsäule 3 ist darüber hinaus ein Drehlager 30 angeordnet, welches eine Drehung des Nachführantriebes 5 und des daran befestigten Tragrahmens 10 mit Solarzellen 1 um die in vertikaler Richtung verlaufende Hochachse H ermöglicht, wozu ein geeigneter Antriebsmotor (nicht dargestellt) vorgesehen ist.

Demgemäß ist der weitere Nachführantrieb 5 mit Führungsschiene 54 und Lagerrädern 51, 52, 53 im Vergleich zum Ausführungsbeispiel gemäß Figuren 1, 2 und 5, 6 um 90° gedreht angeordnet, so dass anstelle einer Verschwenkbarkeit um die Azimuthachse hier der Nachführantrieb 5 mit Lagerrädern 51, 52, 53 und darin zwangsweise entlang der Umfangsrichtung verschiebbarer Führungsschiene 54 eine Verstellung des Tragrahmens 10 um die sogenannte Elevationsachse E bewirken kann, d.h. der Tragrahmen 10 mit darin gehalterten Solarzellen 1 wird in seiner Neigung gegenüber der Horizontalen bei Betätigung des Nachführantriebes 5 verstellt, wobei aus der Zeichnung die jeweiligen Endstellungen des Tragrahmens 10 ersichtlich sind.

Aus der Rückansicht gemäß Figur 4 erkennt man, dass zur Schaffung größerer Stabilität zwei gleich aufgebaute Nachführantriebe 5 deckungsgleich nebeneinander auf der Tragsäule 3 befestigt sind.

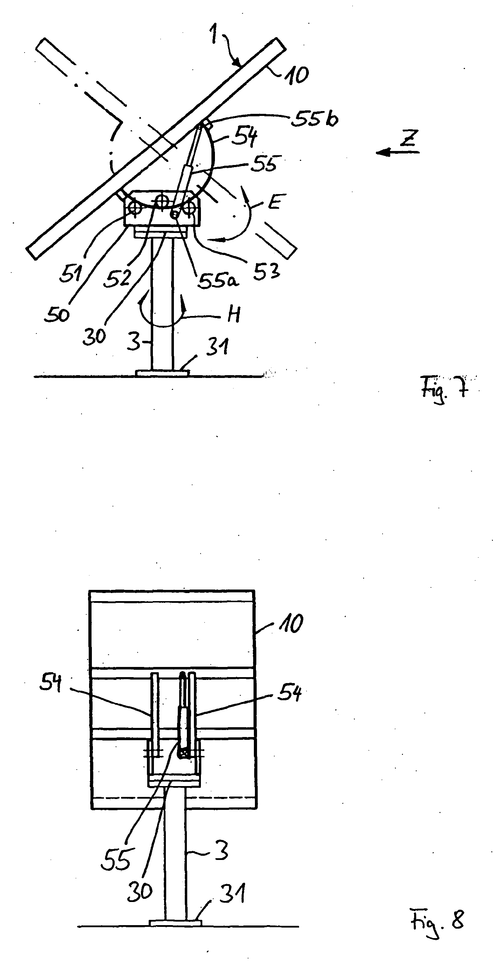

Auch bei diesem Ausführungsbeispiel gemäß Figuren 3 und 4 ist analog zum Ausführungsbeispiel gemäß Figuren 1 und 2 ein Antriebsmotor in nicht näher dargestellter Weise mit einem der Lagerräder, beispielsweise Lagerrad 51 verbunden und wirkt somit unmittelbar auf die Führungsschiene 54 ein, so dass eine Verschiebung derselben in Umfangsrichtung bewirkbar ist, während im alternativen Ausführungsbeispiel gemäß Figuren 7 und 8 analog zum vorangehend erläuterten Ausführungsbeispiel gemäß Figuren 5 und 6 als Antriebsmotor ein Linearantrieb 55 zwischen einem Festlager 55a einem Gelenk 55b am Ende der Führungsschiene 54 eingesetzt ist.

## Patentansprüche

1. Vorrichtung zur Nachführung von Solarzellen (1), mit einem Tragrahmen (10) in dem die solarzellen angeordnet sind und mittels eines Nachführantriebes (5) um mindestens eine Achse verschwenkbar sind, wobei der Nachführantrieb (5) eine ringsegmentförmige Führungsschiene (54) umfasst, die am Tragrahmen (10) befestigt ist und ein Antriebsmotor zum Antrieb der Führungsschiene (54) vorgesehen ist, **dadurch gekennzeichnet, dass** die Führungsschiene (54) zwischen mindestens drei Lagerrädern (51, 52, 53) in Umfangsrichtung der Führungsschiene (54) verschieblich gelagert ist, wobei mindestens ein Lagerrad (52) radial innerhalb der Führungsschiene (54) und mindestens zwei Lagerräder (51, 53) radial außerhalb der Führungsschiene (54) angeordnet sind.

2. Vorrichtung nach Anspruch 1, **dadurch gekennzeichnet, dass** der Antriebsmotor als Linearantrieb (55) ausgebildet ist.

3. Vorrichtung nach Anspruch 2, **dadurch gekennzeichnet, dass** der Linearantrieb (55) elektrisch, hydraulisch oder pneumatisch betreibbar ist.

4. Vorrichtung nach Anspruch 1, **dadurch gekennzeichnet, dass** der Antriebsmotor mit mindestens einem Lagerrad (51, 52, 53) zum Drehantrieb desselben verbunden ist.

5. Vorrichtung nach Anspruch 4, **dadurch gekennzeichnet, dass** das mit dem Antriebsmotor verbundene mindestens eine Lagerrad (51, 52, 53) mittels Reibschluss die Führungsschiene (54) antreibt.

6. Vorrichtung nach Anspruch 4, **dadurch gekennzeichnet, dass** die Führungsschiene (54) auf ihrer dem angetriebenen Lagerrad (51, 52, 53) zugewandten Seite mit einer Verzahnung versehen ist und das angetriebene Lagerrad (51, 52, 53) mit einer entsprechenden Verzahnung für eine Eingriffsverbindung mit der Führungsschiene (54) ausgebildet ist.

7. Vorrichtung nach einem der Ansprüche 1 bis 6, **dadurch gekennzeichnet, dass** der Tragrahmen (10) mittels eines Schwenklagers (4) schwenkbar um eine Azimuthachse (A) gelagert und mittels des Nachführantriebes (5) um die Azimuthachse (A) verschwenkbar ist.

8. Vorrichtung nach einem der Ansprüche 1 bis 7, **dadurch gekennzeichnet, dass** der Tragrahmen (10) an einer Tragsäule (3) gehaltert ist und mittels des Nachführantriebes (5) um eine Elevationsachse (E) verschwenkbar ist.

9. Vorrichtung nach Anspruch 8, **dadurch gekennzeichnet, dass** die Tragsäule (3) ein Drehlager (30) umfasst, mittels dessen der Nachführantrieb (5) und der Tragrahmen (10) um eine Hochachse (H) verschwenkbar ist.

10. Vorrichtung nach einem der Ansprüche 1 bis 9, **dadurch gekennzeichnet, dass** die Führungsschiene (54) halbringförmig ausgebildet ist.

## Claims

1. Device for guiding solar cells (1), with a support frame (10) in which the solar cells are arranged and can be pivoted by means of a guide drive (5) about at least one axis, wherein the guide drive (5) comprises a ring segment-shaped guide rail (54), which is fastened to the support frame (10) and a drive motor is provided to drive the guide rail (54), **characterised in that** the guide rail (54) is displaceably mounted between at least three bearing wheels (51, 52, 53) in the peripheral direction of the guide rail (54), wherein at least one bearing wheel (52) is arranged radially inside the guide rail (54) and at least two bearing wheels (51, 53) are arranged radially outside the guide rail (54).

2. Device according to claim 1, **characterised in that** the drive motor is configured as a linear drive (55).

3. Device according to claim 2, **characterised in that** the linear drive (55) can be operated electrically, hydraulically or pneumatically.

4. Device according to claim 1, **characterised in that** the drive motor is connected to at least one bearing wheel (51, 52, 53) for the rotary drive thereof.

5. Device according to claim 4, **characterised in that** the at least one bearing wheel (51, 52, 53) connected to the drive motor drives the guide rail (54) by means of frictional engagement.

6. Device according to claim 4, **characterised in that** the guide rail (54) is provided with a tooth system on its side facing the driven bearing wheel (51, 52, 53) and the driven bearing wheel (51, 52, 53) is configured with a corresponding tooth system for an engaged connection to the guide rail (54).

7. Device according to any one of claims 1 to 6, **characterised in that** support frame (10) is pivotably mounted about an azimuth axis (A) by means of a pivot bearing (4) and can be pivoted by means of the guide drive (5) about the azimuth axis (A).

8. Device according to any one of claims 1 to 7, **characterised in that** the support frame (10) is held on a support column (3) and can be pivoted by means of the guide drive (5) about an elevation axis (E).

9. Device according to claim 8, **characterised in that** the support column (3) comprises a rotary bearing (30), by means of which the guide drive (5) and the support frame (10) can be pivoted about a vertical axis (H).

10. Device according to any one of claims that 1 to 9, **characterised in that** the guide rail (54) is half ring-shaped.

## Revendications

1. Dispositif pour le guidage précis de photopiles (1) avec un cadre porteur (10) dans lequel les photopiles sont agencées et sont pivotables autour d'au moins un axe au moyen d'un entraînement de poursuite (5),l'entraînement de poursuite (5) comprenant un rail de guidage (54) en forme de segment annulaire, qui est fixé sur le cadre porteur (10), un moteur d'entraînement étant prévu pour l'entraînement du rail de guidage (54), **caractérisé en ce que** le rail de guidage (54) est logé de manière déplaçable entre au moins trois roues d'appui (51,52,53) dans le sens périphérique du rail de guidage (54), au moins une roue d'appui (52) étant disposée radialement à l'intérieur du rail de guidage (54) et au moins deux roues d'appui (51,54) sont disposées radialement à l'extérieur du rail de guidage (54).

2. Dispositif selon la revendication (1), **caractérisé en ce que** le moteur d'entraînement est configuré comme un entraînement linéaire (55).

3. Dispositif selon la revendication 2, **caractérisé en ce que** l'entraînement linéaire (55) est à commande électrique, hydraulique ou pneumatique.

4. Dispositif selon la revendication 1, **caractérisé en ce que** le moteur d'entraînement est relié avec au moins une roue d'appui (51, 52,53) à l'entraînement rotatif de cette dernière.

5. Dispositif selon la revendication 4, **caractérisé en ce que** au moins la roue d'appui (51, 52,53) reliée avec le moteur d'entraînement entraîne le rail de guidage (54) au moyen d'un entraînement à friction.

6. Dispositif selon la revendication 4, **caractérisé en ce que** le rail de guidage (54) est doté, sur sa face tournée vers la roue d'appui menée (51, 52,53), d'une denture et que la roue d'appui menée (51, 52,53) est configurée avec une denture correspondante pour une liaison à engrènement avec le rail de guidage (54).

7. Dispositif selon l'une des revendications 1 à 6, **caractérisé en ce que** le cadre porteur (10) est logé de manière pivotable au moyen d'un palier oscillant (4) autour d'un axe azimutal (A) et est pivotable autour de l'axe azimutal (1) au moyen de l'entraînement de poursuite (5).

8. Dispositif selon l'une des revendications 1 à 7, **caractérisé en ce que** le cadre porteur (10) est arrêté sur une colonne porteuse et est pivotable autour d'un axe d'élévation (E) au moyen de l'entraînement de poursuite (5).

9. Dispositif selon la revendication 8, **caractérisé en ce que** la colonne porteuse (3) comprend un palier rotatif (30) grâce auquel l'entraînement de poursuite (5) et le cadre porteur (10) sont pivotables autour d'un axe vertical (H).

10. Dispositif selon l'une des revendications 1 à 9, **caractérisé en ce que** le rail de guidage (54) a une configuration semi-circulaire.
